# EUROPEAN PATENT APPLICATION

(11) **EP 1 852 009 A2**
(43) Date of publication of application: **07.11.2007**
(21) Application number: 07008940.4
(22) Date of filing: 03.05.2007
(51) Int. Cl.: A01D 34/68, A01D 34/82

(54) **Lawnmower and method of operating the same**

(30) Priority: 03.05.2006 US 797329 P; 06.10.2006 US 544981
(71) Applicant: BRIGGS & STRATTON CORPORATION, Wauwatosa, Wisconsin 53222 (US)
(72) Inventor: McCane, Stephen B., McDonough, GA 30252 (US); Price, Stephen C., Barnsville, GA 30204 (US); Summers, Shane, McDonough, GA 30252 (US)
(74) Representative: Heselberger, Johannes

(57) **Abstract**

A mower (10,210) including a frame (12,212) supporting a blade for movement relative to the frame to trim vegetation, an axle (22,222) connected to the frame and defining an axis (A,D), the axle supporting a wheel (14,214), a drive assembly (36,236) at least partially supported by the frame and operable to rotate the wheel about the axis relative to the frame to move the mower across the vegetation, and a handle arrangement including a grip (64,264) and a leg (50,250) connected to the frame. The grip is operably connected to the drive assembly (36,236) and is connected to the leg for pivoting movement relative to the leg to adjust a drive force transferred from the drive assembly to the axle. The mower also includes a locking arrangement (84,284) for locking the grip (64,264) in a pivoted position relative to the leg (50,250).

## Description

### CROSS-REFERENCE TO RELATED APPLICATIONS

The present application claims priority under 35 U.S.C. § 119 to Provisional Patent Application No. 60/797,329 filed on May 3, 2006, and Utility Patent Application No. 11/544,981, filed on October 6, 2006, the entire contents of which are hereby incorporated by reference.

### FIELD OF THE INVENTION

The present invention relates to mowers and, more particularly, to a lawnmower for trimming vegetation and a method of operating the same.

### SUMMARY

In some embodiments, the invention provides a mower comprising a frame supporting a blade for movement relative to the frame to trim vegetation, and a handle extending upwardly from the frame, defining a longitudinal axis, and including a grip movably connected to a rearward end of the handle for pivoting movement relative to the frame to adjust a speed of the mower as the mower moves across the vegetation.

In addition, some embodiments of the invention provide a mower comprising a frame supporting a blade for movement relative to the frame to trim vegetation, and a handle extending upwardly from the frame, defining a longitudinal axis, and including a grip pivotably connected to a rearward end of the handle for pivoting movement relative to the handle between a first position, in which a forward end of the grip is substantially coaxial with the longitudinal axis, and a second position, in which the forward end of the grip is at an angle of at least about 30 degrees with respect to the longitudinal axis.

In some embodiments, the grip is movable between the first position and the second position to adjust a speed of the mower as the mower moves across the vegetation, and the grip can be locked in the first position. In some such embodiments, the mower includes a drive assembly at least partially supported by the frame and operable to rotate the wheel relative to the frame to move the mower across the vegetation and, when the grip is moved toward the first position, the drive assembly is disengaged from the wheel.

Some embodiments of the invention provide a method of operating a mower including a frame supporting a blade for movement relative to the frame, a handle extending upwardly from the frame, defining a longitudinal axis, and including a grip movably connected to a rearward end of the handle, and a drive assembly at least partially supported by the frame and operable to rotate the wheel relative to the frame to move the mower across the vegetation. In some embodiments, the method includes the acts of moving the blade relative to the frame to trim vegetation, pivoting the grip relative to the handle toward a first position, in which the forward portion of the grip is at an angle of at least about 30 degrees with respect to the longitudinal axis, to disengage the drive assembly, and pivoting the grip relative to the handle toward a second position, in which a forward portion of the grip is substantially coaxial with the longitudinal axis, to engage the drive assembly. In some embodiments, the method can also include the act of locking the grip in the second position to prevent engagement of the drive assembly.

In addition, some embodiment of the invention provide a mower including a frame supporting a blade for movement relative to the frame to trim vegetation, an axle connected to the frame and defining an axis, the axle supporting a wheel, a drive assembly at least partially supported by the frame and operable to rotate the wheel about the axis relative to the frame to move the mower across the vegetation, and a handle arrangement including a grip and a leg connected to the frame. The grip can be operably connected to the drive assembly and can be connected to the leg for pivoting movement relative to the leg to adjust a drive force transferred from the drive assembly to the axle. The mower can also include a locking arrangement for locking the grip in a pivoted position relative to the leg.

Some embodiments of the invention provide a method of operating a mower. The mower can including a frame supporting a wheel and a blade for movement relative to the frame to trim vegetation, a prime mover at least partially supported by the frame, and a handle arrangement including a leg extending outwardly from the frame and supporting a grip. The method can include the acts of locking the grip in a pivoted position relative to the leg, activating the prime mover, and unlocking the grip and moving the grip relative to the leg to drivingly connect the prime mover to the wheel to drive the mower across the vegetation.

In addition, some embodiments of the invention provide a method of operating a mower. The mower can include a frame supporting a blade for movement relative to the frame to trim vegetation, a prime mover at least partially supported by the frame, and a handle arrangement including a leg extending outwardly from the frame and supporting a grip. The method can include the acts of engaging the grip with a first hand while pulling an ignition cord outwardly away from the prime mover with a second hand to activate the prime mover, and moving the grip relative to the leg to adjust a travel speed of the mower across the vegetation to correspond to a travel speed of an operator across the vegetation.

Some embodiments of the invention provide a mower including a frame supporting a blade for movement relative to the frame to trim vegetation, an axle connected to the frame and defining an axis, the axle supporting a wheel, and a drive assembly at least partially supported by the frame and operable to rotate the wheel about the axis relative to the frame to move the mower across the vegetation. The drive assembly can include a prime mover having a driveshaft, a transmission assembly supported on the frame for pivoting movement relative to the frame about the axis between a first position and a second position, the second position being different than the first position, and an endless flexible member engageable with the driveshaft and operable to transfer a drive force from the driveshaft to the axle when the transmission assembly is in the first position. The flexible member can be slidably engageable with the driveshaft when the transmission assembly is in the second position.

Other aspects of the invention will become apparent by consideration of the detailed description and accompanying drawings.

### BRIEF DESCRIPTION OF THE DRAWINGS

Fig. 1 is a rear perspective view of a mower and a drive assembly according to an embodiment of the present invention.

Fig. 2 is a top view of the mower and the drive assembly shown in Fig. 1.

Fig. 3 is a side view of a portion of a handle assembly of the mower shown in Fig. 1.

Fig. 4 is a front perspective view of a portion the handle assembly of the mower shown in Fig. 1.

Fig. 5 is an enlarged top view of a portion of the handle assembly of the mower shown in Fig. 1.

Fig. 6 is a front perspective view of a portion the handle assembly of the mower shown in Fig. 1.

Fig. 7 is a rear perspective view of a portion the handle assembly of the mower shown in Fig. 1.

Fig. 8 is a top view of a portion of a control cable of the mower shown in Fig. 1.

Fig. 9 is a front perspective view of a mower according to another embodiment of the present invention

Fig. 10 is a front perspective view of a handle assembly of the mower shown in Fig. 9 with an actuator in an engaged position.

Fig. 11 is an enlarged front perspective view of a handle assembly of the mower shown in Fig. 9 with an actuator in an engaged position.

Fig. 12 is a front perspective view of the handle assembly of the mower shown in Fig. 9 with the actuator in a disengaged position.

Fig. 13 is an enlarged front perspective view of the handle assembly of the mower shown in Fig. 9 with the actuator in a disengaged position.

Fig. 14 is an enlarged front perspective view of the transmission assembly of the mower shown in Fig. 9 with the transmission assembly in a rearward-most position and with the flexible member removed.

Fig. 15 is an enlarged front perspective view of the transmission assembly of the mower shown in Fig. 9 with the transmission assembly in a forward-most position and the flexible member removed.

### DETAILED DESCRIPTION

Before the various embodiments of the present invention are explained in detail, it is to be understood that the invention is not limited in its application to the details of construction and the arrangements of components set forth in the following description or illustrated in the drawings. The invention is capable of other embodiments and of being practiced or of being carried out in various ways. Also, it is to be understood that phraseology and terminology used herein with reference to device or element orientation (such as, for example, terms like "forward", "rear", "up", and the like) are only used to simplify description of the present invention, and do not alone indicate or imply that the device or element referred to must have a particular orientation. The mower and elements of the mower referred to in the present invention can be installed and operated in any orientation desired. In addition, terms such as "first", "second", and "third" are used herein and in the appended claims for purposes of description and are not intended to indicate or imply relative importance or significance.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

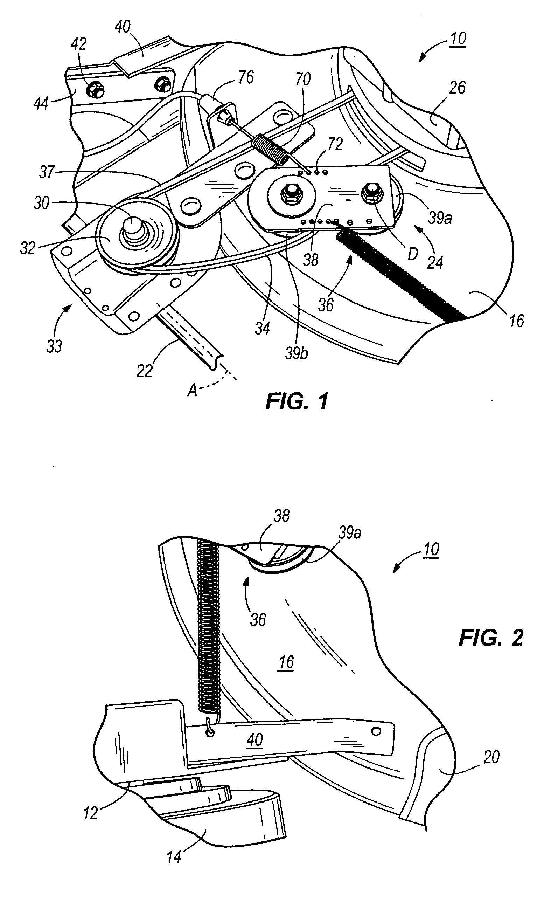

Figs. 1-8 illustrate a mower 10 according to some embodiments of the present invention. The mower 10 of the illustrated embodiment is movable across vegetation and is operable to trim the vegetation, collect clippings, and/or mulch clippings.

As shown in Fig. 2, the mower 10 includes a frame 12, a number of wheels 14 rotatably connected to the frame 12 (or to one or more axles supported by the frame 12), a blade housing or mower deck 16 secured to the frame 12, and a blade (not shown) supported in the blade housing 16 for movement relative to the blade housing 16 and the frame 12 to trim vegetation.

In some embodiments, the mower 10 can also include a chute or duct 20 for collecting clippings and/or mulch and for directing the clippings and/or mulch outwardly away from the blade housing 16 and into a storage hopper, into a collection bag, or onto the ground. In these embodiments, the chute extends radially outwardly from the blade housing 16 and is oriented to direct the mulch or clippings away from an operator standing or walking behind the mower 10.

As shown in Fig. 1, the frame 12 supports an axle 22. The axle 22 defines an axis A and is rotatably connected to the frame 12. One or more of the wheels 14 can be secured to the axle 22 for rotation with the axle 22 about the axis A and relative to the frame 12. In the illustrated embodiment, the axle 22 extends through a rearward portion of the frame 12 and supports the rear wheels 14. In other embodiments, the axle 22 can support one of the rear wheels 14. In still other embodiments, the axle 22 can extend through a forward portion of the frame 12 and can support one or both of the front wheels 14. In other embodiments, the frame 12 can support a gear arrangement for transferring a drive force from the axle 22 to one or more wheels 14 supported by the frame 12 for rotating movement relative to the frame 12.

As shown in Fig. 1, the frame 12 supports a drive assembly 24 including a prime mover 26. In the illustrated embodiment, the prime mover 26 is an internal combustion engine. In other embodiments, the drive assembly 24 can also or alternately include a battery, an electric motor, and/or a fuel cell. As shown in Fig. 1, the prime mover 26 can be supported on the mower deck 16 and can include a driveshaft (not shown) operable to rotate the blade about an axis relative to the frame 12 and/or the mower deck 16.

In other embodiments, the drive assembly 24 also includes a separate blade shaft, which supports the blade, and a transmission, which is operable to transfer a drive force from the driveshaft to the blade shaft to rotate the blade relative to the frame 12 and/or the mower deck 16 about an axis defined by the blade shaft.

In some embodiments, the mower 12 also includes a blade clutch positioned between the driveshaft and the blade shaft. In these embodiments, the blade clutch is movable between an engaged position, in which the blade clutch drivingly connects the driveshaft and the blade shaft to transfer rotational motion from the driveshaft to the blade shaft, and a disengaged position, in which the blade clutch prevents the transfer of rotational motion from the driveshaft to the blade shaft. In some embodiments, the blade clutch is biased toward the disengaged position to prevent inadvertent operation of the blade shaft and the blade.

As shown in Fig. 1, the drive assembly 24 can also include an intermediate shaft 30 and a roller or wheel 32 secured to the intermediate shaft 30. In the illustrated embodiment, the intermediate shaft 30 is positioned in a rearward portion of the mower 10. As shown in Fig. 1, the intermediate shaft 30 is generally perpendicular to the drive axle 22 and is operable to transfer a drive force from the driveshaft through a gear arrangement 33 (partially shown in Fig. 1) to the drive axle 22. In other embodiments, the intermediate shaft 30 and the roller 32 can have other orientations and locations with respect to the drive axle 22, depending, for example, on the location of one or more of the drive axle 22, the driveshaft, and the prime mover 26.

The drive assembly 24 can also include an endless flexible member 37, such as, for example, a belt. As shown in Fig. 1, the flexible member 37 extends around the driveshaft (or a roller supported on the driveshaft) and the roller 32 of the intermediate shaft 30 to drivingly connect the driveshaft and the intermediate shaft 30.

In the illustrated embodiment of Fig. 1, the flexible member 37 has a substantially V-shaped cross section for frictionally engaging the roller 32 and the driveshaft or a roller supported on the driveshaft. In other embodiments, the flexible member 37 can take any other cross-sectional shape (e.g., rectangular, trapezoidal, triangular, or other polygonal shapes, round, oval, or other rotund shapes, irregular shapes, and the like) and can have any size desired.

The flexible member 37 is formed of an elastomeric material, such as, for example, nylon, and other types of plastic, natural or synthetic rubber, and any blend or other combination thereof and has predictable friction characteristics when the flexible member 37 is under varying tension. In this manner and as described below, when the tension of the flexible member 37 is adjusted a predetermined quantity, the frictional engagement between the flexible member 37 and the driveshaft (or a roller supported on the driveshaft) and/or the frictional engagement between the flexible member 37 and the roller 32 of the intermediate shaft 30 is adjusted by a predetermined and corresponding quantity.

As shown in Fig. 1, the drive assembly 24 also includes a transmission assembly 36 including an idler bracket 38, which is pivotably connected to the frame 12 for pivoting movement relative to the frame 12 about a pivot axis D between a first bracket position (shown in Fig. 1), a second or intermediate bracket position, and a third bracket position. In other embodiments, the idler bracket 38 can be movable relative to the frame 12 between two, four, or more positions.

The transmission assembly 36 can also include a first wheel or roller 39a and a second wheel or roller 39b supported by the bracket 86 for pivoting movement with the idler bracket 38 between the first, second, and third bracket positions. As shown in Figs. 2-5, the flexible member 37 extends through the transmission assembly 36 and extends around at least a portion of the first roller 39a and at least a portion of the second roller 39b.

In some embodiments, such as the illustrated embodiment of Figs. 1-8, the first and second rollers 39a, 39b are rotatably connected to the idler bracket 38 for rotating movement relative to the idler bracket 38. As shown in Figs. 1-8, the idler bracket 38 can be pivotably connected to the frame 12 for pivoting movement about the axis of the first roller 39a between the first, second, and third bracket positions. In other embodiments, the idler bracket 38 is pivotable about the axis of the second roller 39b, or alternatively, about an axis extending through another portion of the idler bracket 38.

The idler bracket 38 is movable relative to the frame 12 between the first, second, and third bracket positions to vary the tension of the flexible member 37 and to adjust the transfer of drive force from the driveshaft to the intermediate shaft 30 and the drive axle 22. For example, when the idler bracket 38 is in the first position (shown in Fig. 1), the first and second rollers 39a, 39b apply a maximum tension to the flexible member 37, causing the flexible member 37 to frictionally and non-slidably engage the driveshaft (or a roller supported on the driveshaft) and the roller 32 of the intermediate shaft 30. In this manner, a maximum drive force is transferred from the driveshaft to the intermediate shaft 30 and the drive axle 22, causing the drive axle 22 and the wheels 14 secured to the drive axle 22 to rotate about the axis A relative to the frame 12 at a first rotational velocity.

When the idler bracket 38 is moved toward the second position, the first and second rollers 39a, 39b are moved to an intermediate position with respect to the frame 12 to reduce the tension applied to the flexible member 37, causing the flexible member 37 to slidably engage the driveshaft (or a roller supported on the driveshaft) and/or the roller 32 of the intermediate shaft 30. In this manner, the flexible member 37 is allowed to slip with respect to the driveshaft (or a roller supported on the driveshaft) and/or the roller 32 of the intermediate shaft 30, thereby transferring a reduced drive force from the driveshaft to the intermediate shaft 30 and the drive axle 22. The reduced drive force transferred from the driveshaft to the intermediate shaft 30 causes the drive axle 22 and the wheels 14 to rotate about the axis A relative to the frame 12 at a second slower rotational velocity.

When the idler bracket 38 is moved toward the third position, the first and second rollers 39a, 39b are moved to a third position with respect to the frame 12 to further reduce the tension applied to the flexible member 37, causing the flexible member to slidably engage the driveshaft (or a roller supported on the driveshaft) and/or the roller 32 of the intermediate shaft 30. In this manner, the drive assembly 24 prevents the transfer of drive force from the driveshaft to the intermediate shaft 30 and the drive axle 22.

While reference is made herein to a transmission assembly 36 having first, second, and third pivoted positions for rotating the drive axle 22 and the wheels 14 at first and second rotational velocities and for preventing the transfer of drive force to the drive axle 22 and the wheels 14, in other embodiments, the transmission assembly 36 can have two, four, or more positions relative to the frame 12 for rotating the drive axle 22 and the wheels 14 at three, four, or more different velocities.

In some embodiments, such as the illustrated embodiment of Figs. 1 and 2, handle supports 40 extend upwardly and outwardly from opposite sides of the mower deck 16. Pins 42 extend through the handle supports 40 and secure a handle arrangement 46 to the handle supports 40. More specifically, in the illustrated embodiment of Figs. 1 and 2, the pins 42 secure forward ends 44 of legs 50 of the handle arrangement 46 to the supports 40. In other embodiments, the forward ends 44 of the legs 50 of the handle arrangement 46 can be integrally formed with the mower deck 16. In still other embodiments, the forward ends 44 of the legs 50 can be received in recesses extending into the mower deck 16. In yet other embodiments, a forward end 44 of a single leg 50 of the handle arrangement 46 can be secured to or integrally formed with a central portion of the mower deck 16.

In the illustrated embodiment of Figs. 1-8, the handle arrangement 46 includes two substantially parallel legs 50 having forward ends 44 and rearward ends 52 and defining two substantially parallel longitudinal axes C. One or more cross braces 54 extend substantially horizontally between the legs 50.

In some embodiments, the transmission assembly 36 can also include an actuator 62 operable to move the bracket 38 between the first, second, and third bracket positions and to thereby adjust the speed of the mower 10 as the mower 10 moves across the vegetation. In the illustrated embodiment of Figs. 1-5, the actuator 62 is supported on the handle arrangement 46 and includes a hand grip 64, which extends between the rearward ends 52 of the legs 50 in a direction substantially normal to the parallel longitudinal axes C and is movable relative to the legs 50 to adjust the speed of the mower 10 as the mower 10 moves across the vegetation.

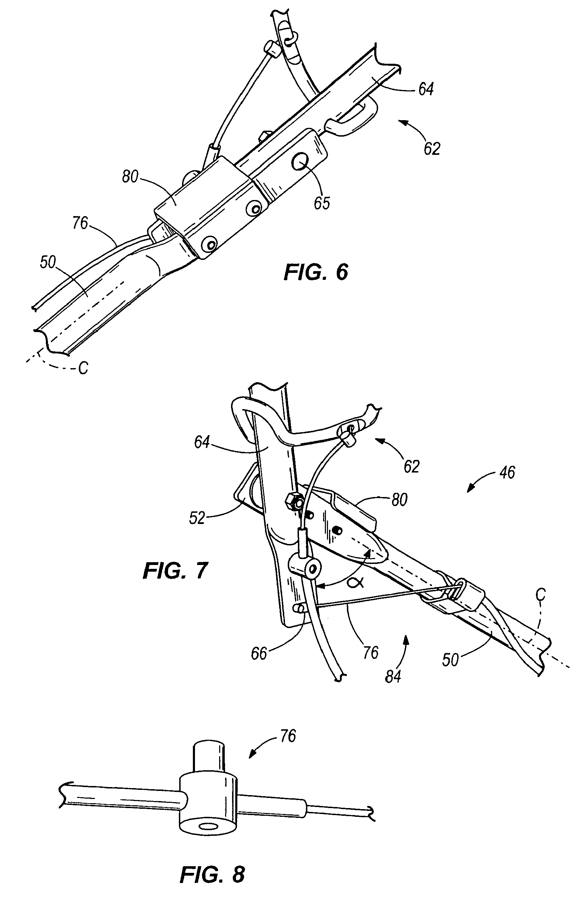

In the illustrated embodiment, pins 65 extend through and pivotably connect forward ends 66 of the hand grip 64 to the rearward ends 52 of the legs 50. In this manner, the hand grip 64 is supported for pivoting movement relative to the legs 50 of the handle arrangement 46 between a first or forward position (shown in Fig. 7), in which the forward ends 66 of the grip 64 are oriented at an angle α (e.g., between about 30 degrees and about 90 degrees) with respect to the longitudinal axes C of the legs 50, and a second position (not shown), in which the forward ends 66 of the grip 64 are oriented at an angle β (e.g., between about 10 degrees and about 45 degrees), and a third or rearward position (shown in Fig. 6), in which the forward ends 66 of the grip 64 are substantially coaxial with the longitudinal axes C of the legs 50. In some embodiments, the hand grip 60 is also movable toward a number of intermediate positions between the first, second, and third positions.

In the illustrated embodiment of Figs. 1-5, the actuator 62 includes an elastic member 70, such as a spring, having a first end and a second end. As shown in Figs. 2-5, the first end of the elastic member 70 is secured to the idler bracket 38. In some embodiments, such as the illustrated embodiment of Figs. 2-5, a number of apertures 72 extend through the idler bracket 38 and provide alternate mounting locations for the elastic member 70.

As shown in Figs. 1-5, the actuator 62 can also include a control cable 76 secured to the second end of the elastic member 70 and extending upwardly from the frame 12 along one of the legs 50 and secured to the forward end 66 of the hand grip 64. As the hand grip 64 and the control cable 76 are moved relative to the legs 50 of the handle arrangement 46, the idler bracket 38 is moved between the first, second, and third bracket positions. In this manner, an operator can adjust the position of the bracket 36 and the tension of the flexible member 37 by moving the hand grip 64 between the first, second, and third positions.

In some embodiments, the handle arrangement 46 can include a stop 80 for limiting pivoting movement of the hand grip 64 relative to the legs 50 of the handle arrangement 46. In the illustrated embodiment of Figs. 1-8, stops 80 extend outwardly from the upper surfaces of each of the legs 50 of the handle arrangement 46 and are engageable with the forward ends 66 of the hand grip 64. In other embodiments, stops 80 can also or alternately be located on the undersides of the legs 50, interior sides of the legs 50, and any other location on the handle arrangement 46 to limit pivoting movement of the hand grip 64.

The handle arrangement 46 can also include a locking arrangement 84 for securing the hand grip 64 in one of the first, second, and third positions (e.g., the third position as shown in Fig. 6). In some such embodiments, the forward end 66 of the hand grip 64 can include a recess and the rearward end 52 of one of the legs 50 of the handle arrangement 46 can include a protrusion, which is engageable in the recess to secure the hand grip 64 in one of the first and second positions. In other embodiments, the forward end 66 of the hand grip 64 can include an outwardly extending protrusion, which is engageable in a recess formed in one of the legs 50 of the handle arrangement 46 to secure the hand grip 64 in one of the first, second, and third positions. In still other embodiments, the locking arrangement 84 can include other inter-engaging elements supported on the hand grip 64 and/or the legs 50 of the handle arrangement 46, such as, for example, pivoting or sliding latches, locking pawls, detents and corresponding spring-loaded locking rollers, etc.

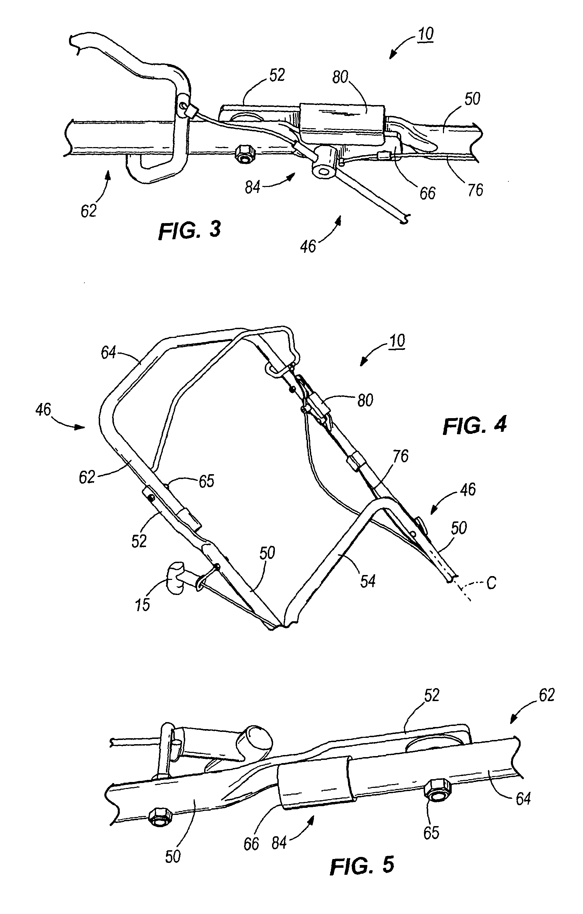

In operation, an operator activates the prime mover 26 and moves the mower 10 toward vegetation. The operator then moves an engagement lever 84 supported on the hand grip 64 from a first position (shown in Fig. 4) downwardly toward a second position (not shown) adjacent to the hand grip 64 to engage the drive assembly 24 and the blade shaft. The drive assembly then moves the blade relative to the frame 12 and the mower deck 16 to trim and/or mulch vegetation.

The operator can also move the hand grip 64 relative to the legs 50 of the handle arrangement 46 to adjust the drive speed of the mower 10. Specifically, the operator can move the hand grip 64 from the third position (shown in Fig. 6) toward the first position (shown in Fig. 7), causing the bracket 38 to pivot about the pivot axis D relative to the frame 12 and causing the rollers 39a, 39 to apply a maximum tension to the flexible member 37. The flexible member 37 then frictionally engages the driveshaft (or a roller supported on the driveshaft) and/or the roller 32 of the intermediate shaft 30, causing increased frictional engagement between the flexible member 37 and the driveshaft (or a roller supported on the driveshaft) and/or the roller 32 of the intermediate shaft 30. In this manner, the flexible member 37 transfers an increased drive force from the driveshaft to the intermediate shaft 30, and eventually to the drive axle 24 to increase the travel speed of the mower 10 across the vegetation.

The operator can then reduce the travel speed of the mower 10 across the vegetation by moving the hand grip 64 relative to the legs 50 of the handle arrangement 46 toward the second position, causing the bracket 38 to pivot about the pivot axis D relative to the frame 12 and causing the rollers 39a, 39b to reduce the tension applied to the flexible member 37. The flexible member 37 then slidingly engages the driveshaft (or a roller supported on the driveshaft) and/or the roller 32 of the intermediate shaft 30, causing increased slippage between the flexible member 37 and driveshaft (or a roller supported on the driveshaft) and/or between the flexible member 37 and the roller 32 of the intermediate shaft 30. In this manner, the flexible member 37 transfers a reduced drive force from the driveshaft to the intermediate shaft 30, and eventually to the drive axle 22 to reduce the travel speed of the mower 10.

Alternatively, the operator can move the hand grip 64 toward the third position (shown in Fig. 6) to disengage the flexible member 37 from the driveshaft (or a roller supported on the driveshaft) and/or the roller 32 of the intermediate shaft 30 to prevent the transfer of a drive force from the driveshaft to the intermediate shaft 30, and eventually to the drive axle 22 to prevent the transfer of drive force from the drive shaft to the intermediate shaft 30 and the drive axle 22.

In this manner, an operator can selectively increase or decrease the travel speed of the mower 10 so as to coordinate the travel speed of the mower across the ground with the operator's travel speed across the ground. More specifically, as the operator walks faster, the operator applies an increased force to the hand grip 64, causing the flexible member 37 to more closely engage the driveshaft (or a roller supported on the driveshaft) and/or the roller 32 of the intermediate shaft 30 to increase the transfer of drive force from the drive shaft to the intermediate shaft 30 and the drive axle 22. Alternatively, as the operator slows his pace, the operator applies a decreased force to the hand grip 64, causing the flexible member 37 to more loosely engage the driveshaft (or a roller supported on the driveshaft) and/or the roller 32 of the intermediate shaft 30 to decrease the transfer of drive force from the drive shaft to the intermediate shaft 30 and the drive axle 22. In some embodiments, this process can occur without the operator noticing a change or making a conscious effort to adjust the travel speed of the mower 10.

After the operator moves the hand grip 64 toward the third position, the operator can engage the locking arrangement 84 to prevent movement of the hand grip 64 with respect to the legs 50 of the handle arrangement 46. Specifically, the operator can engage the locking arrangement 84 when the operator is trimming vegetation around small obstacles and desires to more directly control forward movement of the mower 10 across the vegetation.

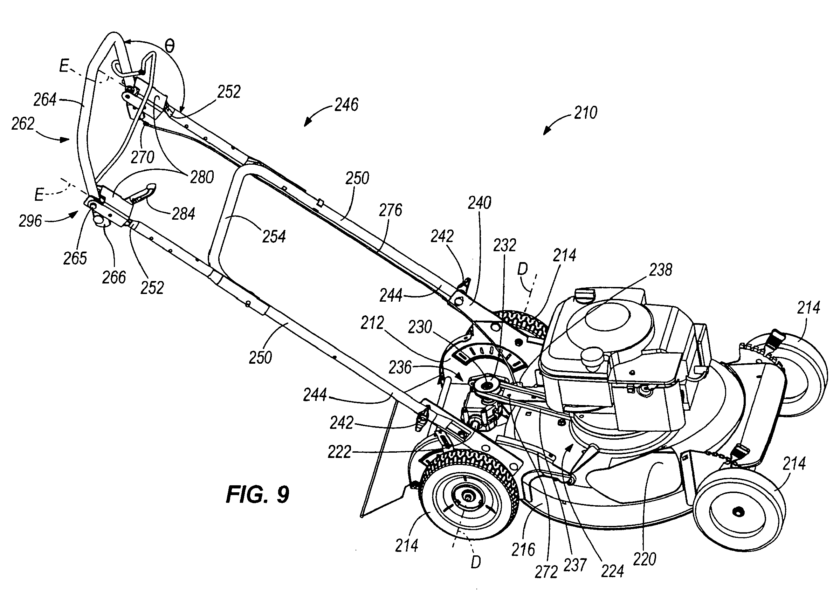

Figs. 9-15 illustrate an alternate embodiment of a mower 210 according to the present invention. The mower 210 shown in Figs. 9-15 is similar in many ways to the illustrated embodiments of Figs. 1-8 described above. Accordingly, with the exception of mutually inconsistent features and elements between the embodiment of Figs. 9-15 and the embodiments of Figs. 1-8, reference is hereby made to the description above accompanying the embodiments of Figs. 1-8 for a more complete description of the features and elements (and the alternatives to the features and elements) of the embodiment of Figs. 9-15. Features and elements in the embodiment of Figs. 9-15 corresponding to features and elements in the embodiments of Figs. 1-8 are numbered in the 200 series.

As shown in Fig. 9, the mower 210 includes a frame 212, a number of wheels 214 rotatably connected to the frame 212 (or to one or more axles supported by the frame 212), a blade housing or mower deck 216 secured to the frame 212, and a blade (not shown) supported in the blade housing 216 for movement relative to the blade housing 216 and the frame 212 to trim vegetation. In some embodiments, the mower 210 can also include a chute or duct.

As shown in Fig. 9, the frame 212 supports an axle 222. The axle 222 defines an axis D and is rotatably connected to the frame 212. One or more of the wheels 214 can be secured to the axle 222 for rotation with the axle 222 about the axis D and relative to the frame 212. In the illustrated embodiment, the axle 222 extends through a rearward portion of the frame 212 and supports the rear wheels 214. In other embodiments, the axle 222 can support one of the rear wheels 214. In still other embodiments, the axle 222 can extend through a forward portion of the frame 212 and can support one or both of the front wheels 214. In other embodiments, the frame 212 can support a gear arrangement for transferring a drive force from the axle 222 to one or more wheels 214 supported by the frame 212 for rotating movement relative to the frame 212.

As shown in Figs. 9, 14, and 15, the frame 112 supports a drive assembly 224, including a prime mower, a battery, an electric motor, and/or a fuel cell. In other embodiments, the drive assembly 224 also includes a separate blade shaft, which supports the blade, and a transmission, which is operable to transfer a drive force from the driveshaft to the blade shaft to rotate the blade relative to the frame 212 and/or the mower deck 216 about an axis defined by the blade shaft.

In some embodiments, the mower 212 also includes a blade clutch positioned between the driveshaft and the blade shaft. In these embodiments, the blade clutch is movable between an engaged position, in which the blade clutch drivingly connects the driveshaft and the blade shaft to transfer rotational motion from the driveshaft to the blade shaft, and a disengaged position, in which the blade clutch prevents the transfer of rotational motion from the driveshaft to the blade shaft. In some embodiments, the blade clutch is biased toward the disengaged position to prevent inadvertent operation of the blade shaft and the blade.

As shown in Figs. 9, 14, and 15, the drive assembly 224 can also include a transmission assembly including an intermediate shaft 230 and a roller or wheel 232 secured to the intermediate shaft 230. In the illustrated embodiment, the intermediate shaft 230 is positioned in a rearward portion of the mower 210. As shown in Fig. 9, the intermediate shaft 230 is generally perpendicular to the drive axle 222 and is operable to transfer a drive force from the driveshaft through a gear arrangement to the drive axle 222. In other embodiments, the intermediate shaft 230 and the roller 232 can have other orientations and locations with respect to the drive axle 222, depending, for example, on the location of one or more of the drive axle 222, the driveshaft, and the prime mover.

The drive assembly 224 can also include an endless flexible member 237, such as, for example, a belt. As shown in Fig. 9, the flexible member 237 extends around the driveshaft (or a roller supported on the driveshaft) and the roller 232 of the intermediate shaft 230 to drivingly connect the driveshaft and the intermediate shaft 230.

In some embodiments, such as the illustrated embodiment of Figs. 9-13, handle supports 240 extend upwardly and outwardly from opposite sides of the mower deck 216. Pins 242 extend through the handle supports 240 and secure a handle arrangement 246 to the handle supports 240. More specifically, in the illustrated embodiment of Figs. 9-13, the pins 242 secure forward ends 244 of legs 250 of the handle arrangement 246 to the supports 240. In other embodiments, the forward ends 244 of the legs 250 of the handle arrangement 246 can be integrally formed with the mower deck 216. In still other embodiments, the forward ends 244 of the legs 250 can be received in recesses extending into the mower deck 216. In yet other embodiments, a forward end 244 of a single leg 250 of the handle arrangement 246 can be secured to or integrally formed with a central portion of the mower deck 216.

In the illustrated embodiment of Figs. 9-13, the handle arrangement 246 includes two substantially parallel legs 250 having forward ends 244 and rearward ends 252 and defining two substantially parallel longitudinal axes E. One or more cross braces 254 extend substantially horizontally between the legs 250.

In the illustrated embodiment of Figs. 9-13, an actuator 262 is supported on the handle arrangement 246 and includes a hand grip 264, which extends between the rearward ends 252 of the legs 250 in a direction substantially normal to the parallel longitudinal axes E and is movable relative to the legs 250 to adjust the speed of the mower 210 as the mower 210 moves across the vegetation.

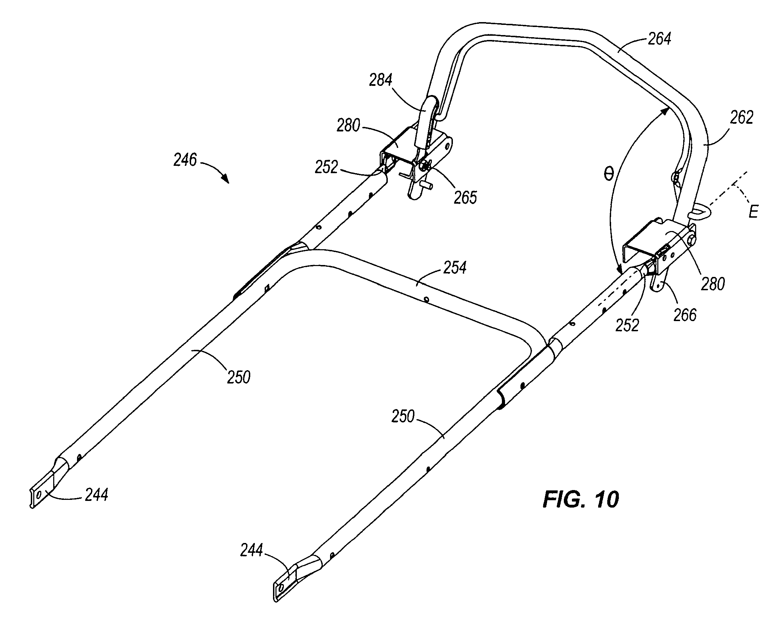

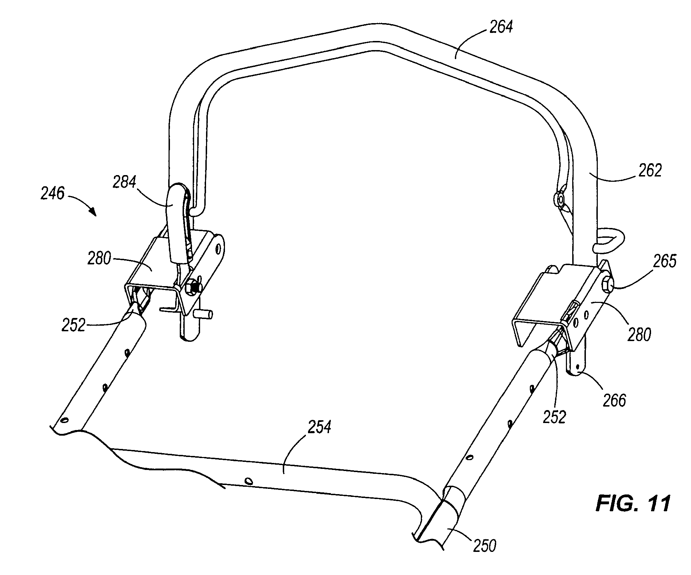

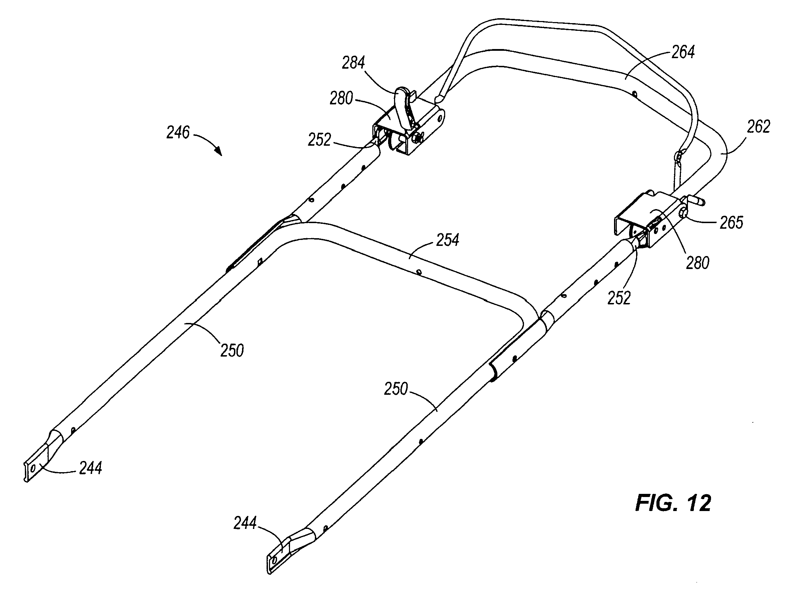

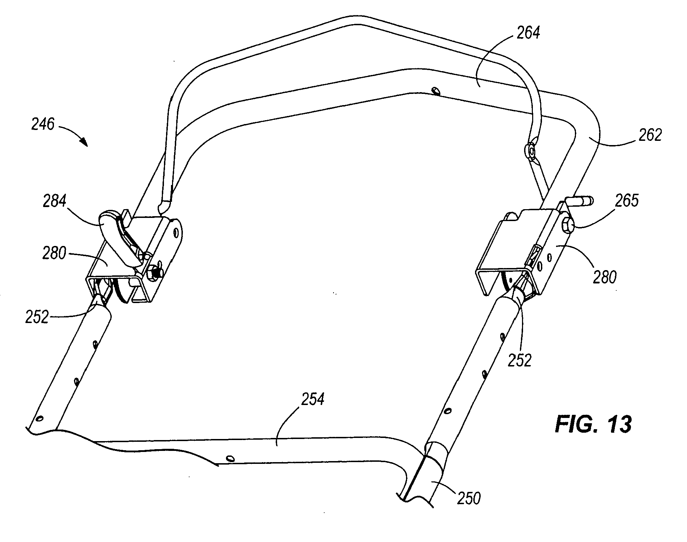

In the illustrated embodiment, pins 265 extend through and pivotably connect forward ends 266 of the hand grip 264 to the rearward ends 252 of the legs 250. In this manner, the hand grip 264 is supported for pivoting movement relative to the legs 250 of the handle arrangement 246 between a first or forward position (shown in Figs. 10 and 11), in which the forward ends 266 of the grip 264 are oriented at an angle θ (e.g., between about 30 degrees and about 90 degrees) with respect to the longitudinal axes E of the legs 250 and a second or rearward position (shown in Figs. 12 and 13), in which the forward ends 266 of the grip 264 are substantially coaxial with the longitudinal axes E of the legs 250. In some embodiments, the hand grip 260 is also movable toward a plurality of intermediate positions between the first and second positions.

As shown in Figs. 9-13, the hand grip 264 is also movable with respect to the legs 250 to change a length of the handle arrangement 246 measured between the forward ends 244 of legs 250 of the handle arrangement 246 and the rearward end of the hand grip 264 between a minimum length (shown in Fig. 10) and a maximum length (shown in Fig. 12).

In the illustrated embodiment of Figs. 9-13, the actuator 262 includes an elastic member 270, such as a spring, having a first end and a second end. The actuator 262 can also include a control cable 276 secured to the second end of the elastic member 270 and extending upwardly from the frame 212 along one of the legs 250 and secured to the forward end 266 of the hand grip 264. As the hand grip 264 and the control cable 276 are moved relative to the legs 250 of the handle arrangement 246, the hand grip 264 is moved between the first and second positions. In this manner, an operator can adjust the position of a plate 238 (described below) and the tension of the flexible member 237 by moving the hand grip 264 between the first and second positions.

In some embodiments, the handle arrangement 246 can include a stop 280 for limiting pivoting movement of the hand grip 264 relative to the legs 250 of the handle arrangement 246 in both the forward and rearward directions. In the illustrated embodiment of Figs. 9-13, stops 280 extend outwardly from the upper surfaces of each of the legs 250 of the handle arrangement 246 and are engageable with the forward ends 266 of the hand grip 264. In other embodiments, stops 280 can also or alternately be located on the undersides of the legs 250, interior sides of the legs 250, and any other location on the handle arrangement 246 to limit pivoting movement of the hand grip 264.

The handle arrangement 246 can also include a locking arrangement 284 for securing the hand grip 264 in the second position (e.g., the second position as shown in Figs. 12 and 13). In the illustrated embodiment of Figs. 9-15, the locking arrangement 284 includes a locking member or arm 290 and an actuator 292 supported by one of the stops 280 on the handle arrangement 246. In other embodiments, one or both of the locking member 290 and the actuator 292 can be supported in other locations on the handle arrangement 246. In still other embodiments, two or more locking arrangements 282 can be used. In some such embodiments, one locking arrangement 284 can be supported on one leg 250 (i.e., the left leg) for engaging a first end of the grip 264 and a second locking arrangement 284 can be supported on the other leg 250 (i.e., the right leg) for engaging a second end of the grip 264.

In some embodiments, such as the illustrated embodiment of Figs. 9-15, the locking arrangement 284 can be supported on the handle arrangement 246 for pivoting movement relative to the handle arrangement 284 between a first or locked position (shown in Figs. 12 and 13) and a second or unlocked position (shown in Figs. 10 and 11). When the locking arrangement 284 is in the unlocked position, the actuator 292 is moved rearwardly and the locking member 290 is pivoted forwardly away from a forward or distal end of the hand grip 264. When the locking arrangement 284 is in the locked position, the actuator 292 is moved forwardly and the locking member 290 is pivoted rearwardly into camming engagement with the forward or distal end of the hand grip 264 to secure the hand grip 264 in the second position.

In some embodiments, the locking arrangement 284 can be prevented from moving toward the locked position when the hand grip 264 is in the first position to prevent an operator from inadvertently locking the hand grip 264 in an operating position. In these embodiments, the locking arrangement can he prevented from moving toward the locked position when the hand grip 264 is not in an off or no operating position, such as, for example, the second position.

The handle arrangement 246 can also include a tensioning assembly 296 for securing the hand grip 264 to the legs 250. In the illustrated embodiment, the tensioning assembly 296 includes a fastener 265 pivotably connecting the hand grip 264 to each of the legs 250 and an elastic member, such as for example, a washer or other insert formed from an elastic material (e.g., plastic, rubber, nylon, composites, wood, and the like). In some such embodiments, the fastener 265 can be tightened to compress the elastic member to more securely connect the hand grip 264 to the legs 250.

As shown in Figs. 9, 14, and 15, the drive assembly 224 can include an actuator plate 238 supported on the frame 212 and the transmission assembly 236 or a portion of the transmission assembly 236 can be supported on the frame 212 for pivoting movement relative to the frame 212 about the axis D of the axle 222. In some embodiments, such as the illustrated embodiment of Figs. 9-15, an end of the control cable 276 is connected to the actuator plate 238 and is operable to pivot the transmission assembly 236 or a portion of the transmission assembly 236 when the hand grip 264 is pivoted between the first and second positions.

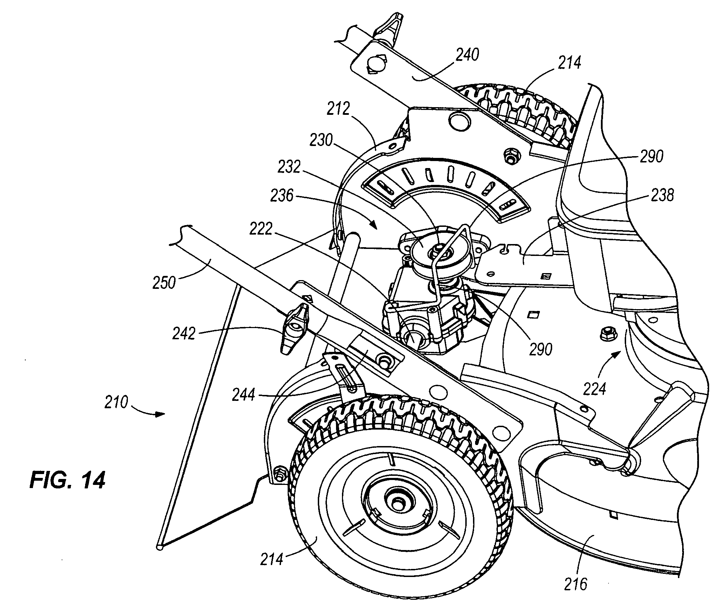

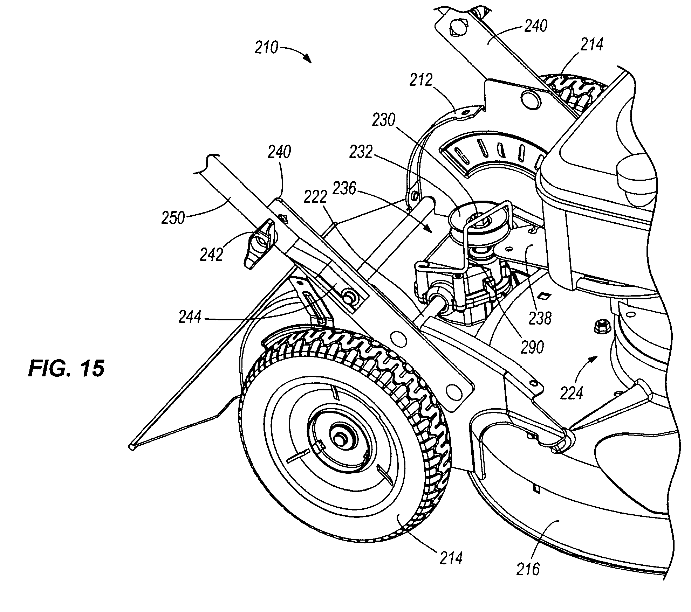

More specifically, when the hand grip 264 is pivoted toward the first position (shown in Figs. 10 and 11), the transmission assembly 236 is pivoted rearwardly (as shown in Fig. 14) to apply a maximum tension to the flexible member 237, causing the mower 10 to travel across the ground at an increased travel speed. When the hand grip 264 is pivoted rearwardly toward the second position (shown in Figs. 12 and 13), the transmission assembly 236 is pivoted forwardly (as shown in Fig. 15) to apply a reduced tension to the flexible member 237, causing the mower 10 to travel across the ground at a reduced travel speed.

In some embodiments, such as the illustrated embodiment of Figs. 9-15, the mower 210 can also include a belt guide or bracket 290 for maintaining the elastic member 237 in engagement with the roller 232 of the intermediate shaft 230. In some such embodiments, the bracket 290 can also or alternatively limit forward movement of the transmission assembly 236.

In operation and as illustrated in Figs. 10-15, an operator places a first hand on the hand grip 264 and uses a second hand to activate the prime mover. In some such embodiments, the operator can activate the prime mover by pulling a pull cord (such as the pull cord 15 shown in Fig. 4). To prevent the hand grip 264 from pivoting from the second position toward the first position while the operator is pulling the pull cord, the operator can lock the hand grip 264 in the second position using the locking arrangement 284.

The operator can then unlock the hand grip 264 and move the hand grip 264 relative to the legs 250 of the handle arrangement 246 to adjust the drive speed of the mower 210. Specifically, the operator can move the hand grip 264 from the second position (shown in Figs. 12 and 13) toward the first position (shown in Figs. 10 and 11), causing the plate 238 to pivot relative to the frame 212 and causing the transmission assembly 236 to apply a maximum tension to the flexible member 237.

The flexible member 237 then frictionally engages the driveshaft (or a roller supported on the driveshaft) and/or the roller 232 of the intermediate shaft 230, causing increased frictional engagement between the flexible member 237 and the driveshaft (or a roller supported on the driveshaft) and/or the roller 232 of the intermediate shaft 230. In this manner, the flexible member 237 transfers an increased drive force from the driveshaft to the intermediate shaft 230, and eventually to the drive axle 222 to increase the travel speed of the mower 210 across the vegetation.

The operator can then reduce the travel speed of the mower 210 across the vegetation by moving the hand grip 264 relative to the legs 250 of the handle arrangement 246 from the first position toward the second position, causing the plate 238 to pivot relative to the frame 212 and causing the transmission assembly 236 to reduce the tension applied to the flexible member 237. The flexible member 237 then slidingly engages the driveshaft (or a roller supported on the driveshaft) and/or the roller 232 of the intermediate shaft 230, causing increased slippage between the flexible member 237 and driveshaft (or a roller supported on the driveshaft) and/or between the flexible member 237 and the roller 232 of the intermediate shaft 230. In this manner, the flexible member 237 transfers a reduced drive force from the driveshaft to the intermediate shaft 230, and eventually to the drive axle 222 to reduce the travel speed of the mower 210.

Alternatively, the operator can move the hand grip 264 into a plurality of positions between the first position and second position for a plurality of resultant travel speeds of the mower 210.

The embodiments described above and illustrated in the figures are presented by way of example only and are not intended as a limitation upon the concepts and principles of the present invention.

## Claims

1. A mower comprising:
a frame supporting a blade for movement relative to the frame to trim vegetation;
an axle connected to the frame and defining an axis, the axle supporting a wheel;
a drive assembly at least partially supported by the frame and operable to rotate the wheel about the axis relative to the frame to move the mower across the vegetation;
a handle arrangement including a grip and a leg connected to the frame, the grip being operably connected to the drive assembly and being connected to the leg for pivoting movement relative to the leg to adjust a drive force transferred from the drive assembly to the axle; and
a locking arrangement for locking the grip in a pivoted position relative to the leg.

2. The mower of claim 1, wherein the leg is a first leg, wherein the handle arrangement includes a second leg extending outwardly from the frame, and wherein opposite ends of the grip are connected to rearward ends of the first leg and the second leg.

3. The mower of claim 1, wherein the leg defines an axis extending between opposite ends, and wherein the grip is movable relative to the leg between a first position, in which a distal end of the grip is moved away from the leg, and a second position, in which a distal end of the grip is substantially aligned with a rearward end of the leg along the axis of the leg.

4. The mower of claim 3, wherein, when the grip is moved toward the first position, the drive assembly is drivingly connected to the axle to transfer the drive force from the drive assembly to the axle, and wherein, when the grip is moved to the second position, the drive assembly is drivingly disconnected from the axle to prevent the transfer of the drive force from the drive assembly to the axle.

5. The mower of claim 1, wherein the locking arrangement includes an arm supported on the leg for pivoting movement relative to the leg to selectively cammingly engage the grip.

6. The mower of claim 1, wherein the locking arrangement includes an actuator supported on the handle arrangement adjacent to the grip.

7. The mower of claim 6, wherein the actuator is movable relative to the handle arrangement between a locked position and an unlocked position, wherein the grip is movable between a first position, in which the drive assembly is drivingly connected to the axle, and a second position, in which the drive assembly is drivingly disconnected from the axle, and wherein, when the grip is in the first position, the actuator is prevented from being moved toward the locked position.

8. The mower of claim 1, wherein the hand grip is movable relative to the leg to change a length of the handle arrangement.

9. The mower of claim 1, wherein, when the locking arrangement is in a locked position, the drive arrangement is prevented from transferring the drive force to the axle.

10. The mower of claim 1, wherein at least a portion of the drive assembly is movable relative to the frame between a first position and a second position, the second position being different than the first position, and wherein the drive assembly includes
a prime mover having a driveshaft; and
an endless flexible member being engageable with the driveshaft and operable to transfer the drive force from the driveshaft to the axle when the drive assembly is in the first position, the flexible member being slidably engageable with the driveshaft when the drive assembly is in the second position.

11. The mower of claim 1, wherein the drive assembly includes an endless flexible member for transferring the drive force to the axle, and wherein tension in the flexible member is changeable in response to pivoting movement of the grip.

12. A method of operating a mower, the mower including a frame supporting a wheel and a blade for movement relative to the frame to trim vegetation, a prime mover at least partially supported by the frame, and a handle arrangement including a leg extending outwardly from the frame and supporting a grip, the method comprising the acts of:
locking the grip in a pivoted position relative to the leg;
activating the prime mover; and
unlocking the grip and moving the grip relative to the leg to drivingly connect the prime mover to the wheel to drive the mower across the vegetation.

13. The method of claim 12, further comprising moving the grip relative to the leg to adjust a travel speed of the mower across the vegetation.

14. The method of claim 13, wherein the mower includes an endless flexible member for transferring a drive force to the wheel, and wherein adjusting the travel speed of the mower includes changing the tension in the flexible member.

15. The method of claim 12, further comprising engaging the grip with a first hand while pulling an ignition cord outwardly away from the prime mover with a second hand to activate the prime mover.

16. The method of claim 12, further comprising moving the grip relative to the leg to change a length of the handle arrangement.

17. The method of claim 12, wherein locking the grip in the pivoted position includes axially aligning an outer end of the grip with a rearward end of the leg.

18. A method of operating a mower, the mower including a frame supporting a blade for movement relative to the frame to trim vegetation, a prime mover at least partially supported by the frame, and a handle arrangement including a leg extending outwardly from the frame and supporting a grip, the method comprising the acts of:
engaging the grip with a first hand while pulling an ignition cord outwardly away from the prime mover with a second hand to activate the prime mover; and
moving the grip relative to the leg to adjust a travel speed of the mower across the vegetation to correspond to a travel speed of an operator moving across the vegetation.

19. The method of claim 18, further comprising locking the grip in a pivoted position relative to the handle arrangement.

20. The method of claim 19, wherein locking the grip in the pivoted position includes axially aligning an outer end of the grip with a rearward end of the leg.

21. The method of claim 18, further comprising moving the grip relative to the leg to change a length of the handle arrangement.

22. The method of claim 18, wherein the frame supports a wheel, wherein the mower includes an endless flexible member for transferring a drive force to the wheel, and wherein adjusting the travel speed of the mower includes changing a tension in the flexible member.

23. A mower comprising:
a frame supporting a blade for movement relative to the frame to trim vegetation;
an axle connected to the frame and defining an axis, the axle supporting a wheel; and
a drive assembly at least partially supported by the frame and operable to rotate the wheel about the axis relative to the frame to move the mower across the vegetation, the drive assembly including
a prime mover having a driveshaft;
a transmission assembly supported on the frame for pivoting movement relative to the frame about the axis between a first position and a second position, the second position being different than the first position; and
an endless flexible member engageable with the driveshaft and operable to transfer a drive force from the driveshaft to the axle when the transmission assembly is in the first position, the flexible member being slidably engageable with the driveshaft when the transmission assembly is in the second position.

24. The mower of claim 23, wherein, when the transmission assembly is in the first position, the flexible member non-slidably engages the driveshaft.

25. The mower of claim 23, wherein the flexible member is operable to transfer a second drive force to the axle when the transmission assembly is in the second position, the second drive force being less than the first drive force.

26. The mower of claim 23, wherein, when the transmission assembly is in the first position, the flexible member rotates the wheel relative to the frame about the axis at a first velocity, and wherein, when the transmission assembly is in the second position, the flexible member rotates the wheel relative to the frame about the axis at a second velocity, the first velocity being greater than the second velocity.

27. The mower of claim 23, wherein the transmission assembly is movable relative to the frame toward a plurality of intermediate positions between the first position and the second position to adjust a transfer of the drive force from the driveshaft to the axle.

28. The mower of claim 23, wherein, during movement of the mower across the vegetation, the transmission assembly is movable between the first position and the second position.

29. The mower of claim 23, further comprising a handle arrangement including a grip and a leg connected to the frame, the grip being operably connected to the drive assembly and being connected to the leg for pivoting movement relative to the leg to adjust the drive force transferred from the drive shaft to the axle.

30. The mower of claim 29, further comprising a locking arrangement for locking the grip in a pivoted position relative to the leg.
